# DEMANDE DE BREVET EUROPEEN

(11) **EP 0 539 294 A1**
(43) Date de publication de la demande: **28.04.1993**
(21) Numéro de dépôt: 92402885.5
(22) Date de dépôt: 22.10.1992
(51) Int. Cl.: A45D 34/02, G01N 1/28

(54) **Dispositif pour échantillonner une substance odorante contenue dans un récipient pulvérisateur**

(30) Priorité: 23.10.1991 FR 9113088
(71) Demandeur: Godet, Claude, F-91330 Yerres (FR)
(72) Inventeur: Godet, Claude, F-91330 Yerres (FR)
(74) Mandataire: Colas, Jean-Pierre

(57) **Abrégé**

Pour permettre l'étude olfactive d'une substance odorante sans la dispersion dans l'atmosphère, un récipient (1) pourvu d'un couvercle (6) enferme une masse poreuse (4) par exemple en feutre ou en mousse plastique à pores ouverts. Un orifice (10) dans le couvercle peut permettre d'envoyer sur la masse poreuse une petite quantité de la substance, si celle-ci est contenue dans un récipient pulvérisateur. La substance odorante pourra être étudiée en enlevant le couvercle, et on remet celui-ci en place après l'étude, ce qui limite au maximum la dispersion de substances odorantes dans l'atmosphère, cette dispersion risquant de gêner l'étude et de perturber la santé de l'opérateur.

## Description

La présente invention est relative à un dispositif pour échantillonner une substance odorante contenue dans un récipient pulvérisateur.

Dans divers domaines, la voie olfactive fournit un moyen rapide et peu coûteux pour identifier et analyser de façon approchante une substance odorante, ou comparer entre elles deux substances odorantes. Outre l'industrie et le commerce des parfums, on peut citer l'industrie alimentaire, la chimie, votre la criminologie, etc...

La substance odorante qu'il s'agit d'échantillonner est, au préalable, placée dans un récipient étanche, qui peut être un conteneur fermé, susceptible d'être ouvert pour permettre d'en extraire, par gravité, capillarité ou autrement, ladite substance. Généralement, il s'agit d'ion récipient dit "pulvérisateur", qui est capable de délivrer ladite substance si elle est liquide, soit sous forme de petites gouttelettes entraînées par un gaz, soit sous forme de gouttes. La substance peut également être sous forme de poudre solide ou de gaz, on appellera "récipient pulvérisateur" tout récipient étanche capable, sur commande volontaire, de délivrer une petite quantité de la substance qu'il contient.

Comme les organes olfactifs sont sensibles à des substances en phase gaz ou vapeur, si la substance à échantillonner est liquide ou solide, elle doit être déposée sur un support pour y passer à l'état de vapeur. Selon la technique usuelle dans le commerce de la parfumerie, le support est constitué par une partie du corps de la personne concernée, par exemple le dos de la main, en raison des interactions entre le parfum et la peau.

Quelle que soit la substance odorante, le local dans lequel se fait l'étude olfactive de substances odorantes a tendance à se charger de ces substances sous forme de vapeur ou de gaz jusqu'à un niveau tel que l'étude est rendue plus difficile ou moins exacte, et même jusqu'à avoir des conséquences indésirables sur la santé des personnes qui séjournent dans le local.

On peut évidemment réduire ces inconvénients par une aération appropriée, mais, pour être efficaces, Les installations correspondantes sont encombrantes et coûteuses.

Il est donc désirable de disposer de moyens pour réduire au maximum la teneur en substances odorantes dispersées dans l'atmosphère d'un local où l'on réalise l'échantillonnage. Ces moyens doivent bien entendu être simples et peu coûteux.

Pour obtenir ce résultat, l'invention fournit un dispositif pour échantillonner une substance odorante contenue dans un conteneur fermé, qui présente pour particularité qu'il comprend :
- une masse poreuse, capable d'absorber une petite quantité de substance odorante et de la restituer par évaporation ou par dépôt sur une surface,
- un récipient contenant la masse poreuse tout en laissant libre une partie de la surface de cette masse poreuse,
- un couvercle qui, lorsqu'il est placé sur le récipient, isole de l'atmosphère ladite partie libre de la surface de la masse poreuse,
- et des moyens pour transférer une petite quantité de substance odorante depuis le conteneur fermé dans la masse poreuse.

Le mode d'utilisation du dispositif se comprend aisément. On introduit une petite quantité de substance odorante à partir du récipient jusqu'à la masse poreuse. Pour étudier la substance, on enlève le couvercle et on place la masse poreuse à proximité du nez de la personne intéressée, ou bien on dépose un peu de substance, si elle est liquide ou solide, sur un support tel que la peau, en opérant comme avec un crayon à feutre. On replace ensuite le couvercle, si bien que la substance odorante cesse de se répandre dans l'atmosphère, ou se répand seulement de façon très ralentie.

Ainsi seule une petite quantité de substance odorante est dispersée dans l'atmosphère à chaque opération.

Suivant un premier mode de réalisation, le récipient constitue en lui-même le conteneur fermé, ou est conçu comme un réceptacle apte à recevoir ledit conteneur fermé, constituant éventuellement une recharge, et pourvu d'un orifice tourné vers la masse poreuse pour transférer ladite substance odorante dans la masse poreuse. Le conteneur peut être conçu comme une cartouche, analogue à celle d'un stylo, et qui s'ouvre lors de sa mise en place.

Suivant un autre mode de réalisation, l'invention fournit un dispositif pour échantillonner une substance odorante contenue dans un récipient pulvérisateur,
et qui comprend :
- une masse poreuse, capable d'absorber une petite quantité de substance odorante et de la restituer par évaporation ou par dépôt sur une surface,
- un récipient contenant la masse poreuse tout en laissant libre une partie de la surface de cette masse poreuse,
- un couvercle qui, lorsqu'il est placé sur le récipient, isole de l'atmosphère ladite partie libre de la surface de la masse poreuse, ce couvercle comportant un orifice par lequel une petite quantité de substance odorante peut être projetée, à partir du récipient pulvérisateur, vers la masse poreuse.

La matière de la masse poreuse est à choisir en fonction, notamment de la nature de la substance odorante. On peut choisir une masse de fibres, naturelles ou synthétiques, lorsque la substance doit être restituée relativement lentement, ou doit être déposée sur un support. Dans le cas contraire, on pourra préférer une mousse de matière plastique, à porosité ouverte, avantageusement souple.

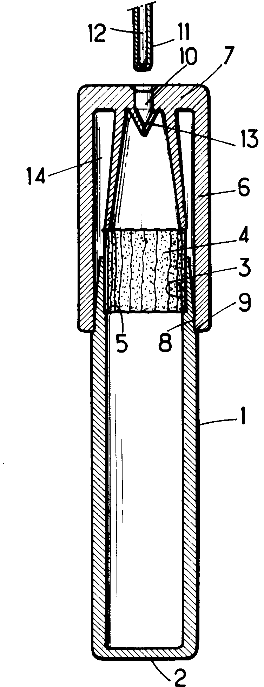

L'invention va maintenant être décrite à l'aide d'un exemple pratique, illustré à l'aide de la figure unique, qui est une coupe schématique axiale d'un exemple de dispositif conforme à l'invention.

Le dispositif décrit comprend un récipient 1, en forme de tube, ayant une extrémité fermée 2, et une extrémité ouverte 3. Les dimensions du récipient 1 sont calculées pour permettre une bonne prise en main. Il est signalé ici que les proportions indiquées par la figure ne correspondent pas nécessairement à la réalité, et on été modifiées dans un but de clarté. Dans l'extrémité ouverte 3, il est prévu une masse poreuse 4, en forme de cylindre plein, maintenue par un épaulement 5 de la surface intérieure du récipient, et fixée par collage. Comme elle est représentée sur la figure, la masse poreuse 4 est formée de fibres, dont la majorité est parallèle à l'axe du cylindre.

Un couvercle 6 a la forme d'un tube ayant une extrémité fermée 7, et une extrémité ouverte 8 conçue pour venir s'emboîter à force sur le récipient 1, l'enfoncement de ce dernier étant limité par un épaulement 9 de sa surface extérieure. L'extrémité fermée 7 du couvercle est traversée par un orifice axial 10, qui présente une section adaptée pour laisser pénétrer à travers ledit orifice un embout de pulvérisation 11, représenté en partie, porté par le récipient pulvérisateur, non représenté. Comme le montre la figure, l'embout 11 est une pièce tubulaire, présentant un alésage axial 12, par lequel peut passer la substance odorante. La longueur de l'embout 11 est suffisante pour qu'il pénètre complètement à l'intérieur du couvercle, en passant à travers l'orifice 10. L'entrée de l'orifice 10 est chanfreinée, pour permettre à l'embout 11 d'y pénétrer plus facilement.

L'orifice 10 est bordé, du côté intérieur du couvercle par une lèvre circulaire 13, qui, au repos, obture ledit orifice, cette lèvre étant calculée pour s'ouvrir sous l'effet de la pénétration de l'embout 11. L'utilité de cette lèvre est d'intercepter presque totalement la substance odorante qui tendrait à s'échapper de l'intérieur du couvercle, après qu'elle y a été introduite.

Dans une variante, non représentée, les dimensions de l'orifice 10 ne permettent pas d'y introduire l'embout 11, celui-ci vient simplement s'appuyer contre l'extrémité 7 du couvercle, et la substance odorante pénètre à l'intérieur du couvercle du seul fait de sa pression propre, en ouvrant la lèvre 13. Celle-ci peut d'ailleurs être supprimée s'il est possible d'accepter une certaine diffusion de la substance odorante dans l'atmosphère.

A l'intérieur du couvercle, il est prévu une surface déflectrice 14, qui va depuis l'extrémité fermée 7 du couvercle jusqu'au contact de la masse poreuse 4, en s'élargissant en direction de celle-ci. Pratiquement, toute la face frontale de masse poreuse se trouve à l'intérieur de la surface déflectrice, si bien que la matière odorante vient se déposer uniformément sur cette face frontale.

Il existe, à l'intérieur du récipient 1, sous la masse poreuse, et à l'intérieur du couvercle 6, entre son extrémité fermée 7 et la masse poreuse, des volumes morts relativement importants. L'utilité de ces volumes morts est de permettre une bonne pénétration de la substance odorante dans la masse poreuse. En effet, à défaut de celles volumes morts, la surpression qui correspond à la projection de la substance par l'embout 11 se transmettrait rapidement à l'intérieur du dispositif, ce qui limiterait de façon exagérée l'efficacité du pulvérisateur.

De préférence, l'orifice 10 présente une section adaptée pour laisser pénétrer l'embout de pulvérisation 11 avec un jeu réduit, de façon à limiter les pertes. Suivant une modalité intéressante, la section de l'orifice 10 est calculée pour permettre le passage d'un embout 11 ayant une section de forme particulière, et empêcher le passage d'un embout ayant une section de forme différente. Par exemple, les embouts équipant les récipients pulvérisateurs commercialisés par une certaine Société auront une section de forme pentagonale, symétrique ou non, et les orifices 10 des dispositifs destinés à coopérer avec ces embouts auront une forme adaptée. De cette façon, une confusion avec des produits commercialisés par une autre Firme sera impossible, si les autres Firmes ont adopté un embout de forme différente.

Dans la réalisation représentée, le dispositif a sensiblement les dimensions d'un stylo, et il permet un petit nombre d'essais. Il serait possible de lui donner des dimensions un peu plus importantes, de façon à permettre son utilisation comme distributeur rechargeable. Toutefois, ces capacités restent naturellement très inférieures à celles d'un récipient pulvérisateur, contenant la substance odorante en grande quantité et, ou sous pression.

On n'a pas jugé utile de représenter une autre réalisation conforme à l'invention, dans laquelle la substance odorante est enfermée dans un conteneur fermé, lui-même logé dans le récipient 1 et comportant un orifice pour faire passer la substance vers la masse poreuse. En effet, les explications données plus haut ont paru suffisante pour un homme de métier. Le choix entre les deux versions est à faire en fonction, notamment, des propriétés physiques du produit et de l'usage prévu. Il est clair, en particulier, que, dans le cas de la deuxième version, le produit doit pouvoir cheminer assez rapidement à l'intérieur de la masse poreuse.

## Revendications

1. Dispositif pour échantillonner une substance odorante contenue dans un conteneur fermé,
caractérisé en ce qu'il comprend :
- une masse poreuse (4), capable d'absorber une petite quantité de substance odorante et de la restituer par évaporation ou par dépôt sur une surface,
- un récipient (1) contenant la masse poreuse tout en laissant libre une partie de la surface de cette masse poreuse,
- un couvercle (6) qui, lorsqu'il est placé sur le récipient, isole de l'atmosphère ladite partie libre de la surface de la masse poreuse, ce couvercle comportant un orifice (10) par lequel une petite quantité de substance odorante peut être projetée, à partir du récipient pulvérisateur, vers la masse poreuse,
- et des moyens pour transférer une petite quantité de substance odorante depuis le conteneur fermé dans la masse poreuse (4).

2. Dispositif selon la revendication 1, caractérisé en ce que le récipient (1) constitue en lui-même le conteneur fermé, ou est conçu comme un réceptacle apte à recevoir ledit conteneur fermé, constituant éventuellement une recharge, et pour d'un orifice tourné vers la masse poreuse pour transférer ladite substance odorante dans la masse poreuse.

3. Dispositif pour échantillonner une substance odorante contenue dans un récipient pulvérisateur,
caractérisé en ce qu'il comprend :
- une masse poreuse (4), capable d'absorber une petite quantité de substance odorante et de la restituer par évaporation ou par dépôt sur une surface,
- un récipient (1) contenant la masse poreuse tout en laissant libre une partie de la surface de cette masse poreuse,
- un couvercle (6) qui, lorsqu'il est placé sur le récipient, isole de l'atmosphère ladite partie libre de la surface de la masse poreuse, ce couvercle comportant un orifice (10) par lequel une petite quantité de substance odorante peut être projetée, à partir du récipient pulvérisateur, vers la masse poreuse.

4. Dispositif selon l'une des revendications 1 à 3, caractérisé en ce que la masse poreuse est une masse de fibres.

5. Dispositif selon l'une des revendications 1 à 3, caractérisé en ce que la masse poreuse est une mousse souple de matière plastique, à porosité ouverte.

6. Dispositif selon l'une des revendications 3 à 5, caractérisé en ce que le récipient (1) a la forme d'un tube ayant une extrémité fermée (2) et une extrémété ouverte (3), la masse poreuse (4) étant en forme de cylindre et maintenue à l'extrémité ouverte du récipient, et en ce que le couvercle (6) a la forme d'un tube ayant une extrémité fermée (7), traversée par ledit orifice (10), et une extrémité ouverte (8) conçue pour venir s'emboîter sur le récipient.

7. Dispositif selon l'une des revendications 3 à 6, caractérisé en ce que le couvercle (6) comporte, intérieurement, au moins une surface déflectrice (14) disposée pour diriger ladite petite quantité de substance odorante depuis le récipient pulvérisateur vers la masse poreuse.

8. Dispositif selon l'une des revendications 3 à 7, caractérisé en ce que l'orifice (10) présente une section adaptée pour laisser pénétrer à travers ledit orifice un embout de pulvérisation (11) porté par ledit récipient pulvérisateur.

9. Dispositif selon la revendication 8, caractérisé en ce que la section de l'orifice (10) est de forme calculée pour permettre le passage d'un embout (11) ayant une section de forme particulière, et empêcher le passage d'un embout ayant une section de forme différente.

10. Dispositif selon l'une des revendications 3 à 9, caractérisé en ce que l'orifice est pourvu de moyens souples d'étanchéité (13), aptes à empêcher ou limiter l'évaporation de substance odorante contenue dans le dispositif.
